# EUROPÄISCHE PATENTANMELDUNG

(11) **EP 1 424 270 A2**
(43) Veröffentlichungstag der Anmeldung: **02.06.2004**
(21) Anmeldenummer: 03450251.8
(22) Anmeldetag: 18.11.2003
(51) Int. Cl.: B62H 3/00

(54) **Fahrradständer**

(30) Priorität: 27.11.2002 AT 80102 U
(71) Anmelder: TCI Produktions- und Vertriebs GmbH, 2340 Mödling (AT)
(72) Erfinder: Hauer, Gerhard, 2340 Mödling (AT)
(74) Vertreter: Patentanwälte BARGER, PISO & PARTNER

(57) **Zusammenfassung**

Die Erfindung betrifft einen Fahrradständer (1) für mehrere Fahrräder, mit einer Aufnahme (3) für die Vorderräder und mit Stehern (4) an denen jeweils ein Fixierarm zur Festlegung am Fahrradrahmen drehbar und längsverschieblich montiert ist.

Die Erfindung ist dadurch gekennzeichnet, dass sowohl die Aufnahmen (3) für die Vorderräder als auch die Steher (4) an einem oberhalb des Fahrbahnniveaus angeordneten Träger (2) befestigt sind und dass die Steher (4) gegenüber der Vertikalen (V) in Einfahrtrichtung der Fahrräder geneigt sind.

## Beschreibung

Die Erfindung betrifft einen Fahrradständer für mehrere Fahrräder, mit einer Aufnahme für die Vorderräder und mit Stehern an denen jeweils ein Fixierarm zur Festlegung am Fahrradrahmen drehbar und längsverschieblich montiert ist.

Es gibt eine große Anzahl von Fahrradständern, die eine Aufnahme für das Vorderrad des Fahrrades und eine Haltevorrichtung für den Rahmen des Fahrrades aufweisen. Da es Fahrräder unterschiedlichster Höhe und mit den verschiedensten Ausführungen von Rahmen gibt, hat man bei einer speziellen Ausgestaltung eines solchen Fahrradständers die Rahmenhalterung aus einem vertikalen Stab; Steher genannt, ausgebildet, auf dem drehbar und höhenverstellbar ein Querbügel, im folgenden meist Fixierarm oder kurz Arm genannt, angebracht ist, den man an passender Stelle über ein Rohr des Fahrradrahmens schiebt und befestigt, so dass das Rad gegen Umkippen oder, bei abschließbarer Befestigung, auch gegen Diebstahl geschützt ist.

Diese Fahrradständer haben sich im Großen und Ganzen bewährt, weisen aber den Nachteil auf, dass, insbesondere nach Einbruch der Dunkelheit, die bei den leeren Abstellplätzen an die tiefste Position abgesunkenen und um die Steher in beliebiger Richtung gedrehten Fixierarm zu ausgesprochenen Stolpersteinen werden, eine Reinigung des Bodens im Bereich des Fahrradständers erschweren und auch das Einschieben eines Fahrrades auf einen leeren Abstellplatz behindern, da es notwendig ist, zuerst das Fahrzeug abzustellen, dann den Fixierarm in eine passende Winkellage zu bringen, sodann das Fahrrad an die dafür vorgesehene Stelle zu schieben, so dass es mit seinem Vorderrad in die Aufnahme für das Vorderrad gelangt und dann den Fixierarm entlang des Stehers nach oben zu schieben, passend zu verdrehen und mit dem Rahmen des Fahrzeuges zu verbinden. Darüber hinaus sind diese Konstruktionen nicht behindertengerecht.

Ein weiterer Nachteil ist, dass diese Fahrradständer, soferne sie nicht überdacht sind, im leeren Zustand überhaupt nur durch die Steher kenntlich sind und so insbesondere bei schlechtem Herbstwetter und bei laubbedecktem Boden nach Einbruch der Dunkelheit nicht richtig wahrgenommen werden, da ja die Aufnahmen für die Vorderräder der Fahrränder in einigem Abstand von den Stehern angeordnet sind.

Die Erfindung zielt darauf ab, einen Fahrzeugständer zu schaffen, der diese Nachteile nicht aufweist und der insbesondere eine leichte Reinigung, eine gute Erkennbarkeit und ein problemloses Einschieben der Fahrräder in den leeren Stellplatz gewährleistet und der entweder an sich behindertengerecht ist oder leicht behindertengerecht ausgestaltet werden kann.

Erfindungsgemäß werden diese Ziele dadurch erreicht, dass sowohl die Aufnahmen für die Vorderräder als auch die Steher an einem oberhalb des Fahrbahnniveaus angeordneten Träger befestigt sind und dass die Steher gegenüber der Vertikalen in Einfahrtrichtung der Fahrräder geneigt sind.

Auf diese Weise erreicht man, dass der Boden mit Ausnahme der Verankerung für den Träger frei von Bauteilen bleibt und somit leicht gereinigt werden kann, durch den Träger und die an ihm befestigten Aufnahmen für die Vorderräder und den an ihm befestigten Stehern erhält man eine optisch gut erkennbare Baueinheit, die man mit normaler Aufmerksamkeit weder als Autofahrer noch als Radfahrer oder Fußgänger übersehen und damit kollidieren oder über Boden nahe Bauteile stolpern kann und durch die schräge Anordnung der Steher, die bei einzeln im Boden verankerten Stehern nicht ökonomisch sinnvoll möglich ist, erreicht man, dass die daran drehbar und längsverschiebbar gelagerten Fixierarm beim Herabrutschen entlang der schrägen Steher, sich in die Richtung gegen die Einfahrtsrichtung der Fahrräder verdrehen und so den Bereich, in dem die Fahrräder eingeschoben werden, zuverlässig freigeben.

Da die Steher erfindungsgemäß mit dem oberhalb des Fahrbahnniveaus befindlichen Träger verbunden sind, gleiten die Arme auch nur bis zu dem Bereich, an den Stehern nach unten, in dem dieses sich zum Träger hin biegen, so dass auch die Arme der freien Einstellplätze nicht am Boden liegen, so dass sie nicht so stark verschmutzen und auch nicht zu Stolpersteinen und Fallen für Fußgänger werden. Wenn der erfindungsgemäße Fahrradständer entsprechend zugänglich aufgestellt ist (beispielsweise direkt am Straßenrand), kann er mit einem üblichen Reinigungsfahrzeug automatisch gereinigt werden.

Die Erfindung wird im folgenden an Hand der Zeichnung näher erläutert: Dabei zeigt
die Fig. 1 eine erste Ausführungsform eines erfindungsgemäßen Fahrradständers,
die Fig. 2 eine Variante mit schräger Anordnung der Stellplätze,
die Fig. 3 eine doppelseitige Variante,
die Fig. 4 eine Variante der Ausführungsform nach Fig. 3,
die Fig. 5 eine besonders platzsparende Variante und
die Fig. 6 eine Variante der Fig. 5.

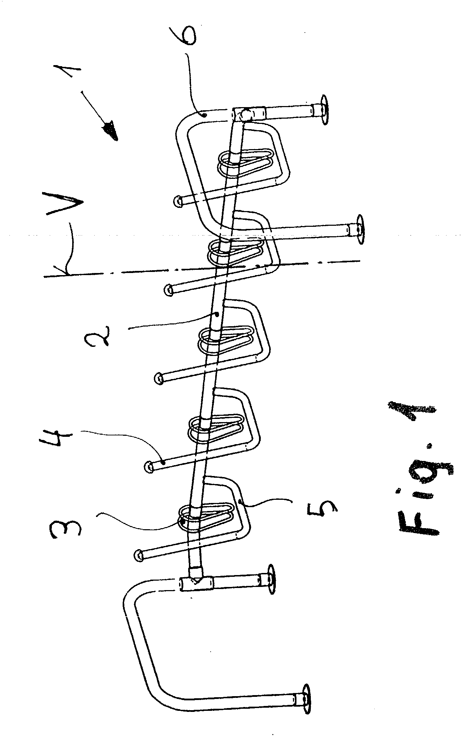

Die Fig. 1 zeigt eine erste Variante eines erfindungsgemäßen Fahrradständers 1 mit einem Träger 2, der sich oberhalb der Fahrbahnebene befindet und daran angeordneten Vorderradaufnahmen 3 und Stehern 4, an denen (nicht dargestellte) verdrehbare und längsverschiebliche Arme (Querbügel) angeordnet sind, die beim Einstellen eines Fahrrades angehoben und durch Verdrehen in dem Bereich eines Teiles des Rahmens passend gebracht und dort fixiert werden. Die Fixierung kann durch federnd oder klappbar angeordnete Endteile oder klauenartige Organe erfolgen, es kann auch einfach durch entsprechendes Durchführen einer vom Benutzer mitzubringenden Fahrrad, Sicherungskette durch eine Öffnung des Armes die Fixierung und die Diebstahlsicherung erfolgen. Das Prinzip des Aufbaues und der Funktionsweise und der Benutzung der Arme ist auf dem Gebiet der Fahrradständer in vielerlei Ausführungsform bekannt und gehört nicht zum Kern der Erfindung, weshalb auch auf der Zeichnung aus Gründen der Übersichtlichkeit davon abgesehen wurde, diese Arme darzustellen oder näher zu beschreiben.

Die Vorderradaufnahmen 3 sind beim dargestellten Ausführungsbeispiel bügelförmig ausgebildet und bestehen aus stärkerem Draht oder einem dünnen Rohr, das am Träger 2, der seinerseits aus einem Stahlrohr oder Stahlprofil od.dgl. besteht, angeschweißt oder angeschraubt, gegebenenfalls auch angenietet oder angeklebt ist. Ihre Aufgabe ist es im wesentlichen, dem Benutzer die Aufstellrichtung und Position des Rades anzugeben, eventuell noch, das Rad während des Hantierens mit dem Fixierarm zu stützten, aber nicht mehr.

Die Steher 4 sind mit dem Träger 2 über einen im wesentlichen U-förmigen Verbindungsteil 5, bevorzugt einstückig ausgebildet, verbunden, durch diesen Verbindungsteil 5 ist es nicht notwendig, für jeden Steher 4 eine Verankerung im Boden vorzunehmen und es kann, wenn der unterste Teil des Verbindungsteiles 5 ausreichenden Abstand von der Fahrbahnoberfläche aufweist, die Reinigung der Fahrbahn im Bereich des Fahrradständers wesentlich vereinfacht werden. Wenn es aus Stabilitätsgründen gewünscht ist, kann entweder im Bereich des Stehers 4 oder an einer anderen Stelle des Verbindungsteiles 5 eine nach unten ragende Abstützung vorgesehen sein, die dann allerdings bevorzugt einfach am Boden aufliegt, um Vandalenakte (Verwendung des Stehers 4 oder des Verbindungsteiles 5 als Klettergerüst oder Hutsche od.dgl.) widerstandsfähiger zu machen.

Es ist leicht ersichtlich, dass die Steher 4 samt Verbindungsteil 5 und den Fixierarmen leicht vom Träger 2 abgenommen werden können, wenn die Befestigung am Träger entsprechend ausgebildet ist. Selbst, wenn es sich um eine Schweißverbindung handelt, ist ein Abtrennen mit einer Flex nicht schwer. Es kann so im Falle einer Beschädigung, beispielsweise eines Vandalenaktes, leicht eine Reparatur der beschädigten Teile durch deren Austausch vorgenommen werden. Das Gleiche gilt für die Befestigung des Trägers 2 an den Verankerungsbügeln 6.

Die Verbindungsteile 5 definieren gemeinsam mit den Stehern 4 eine zumindest im wesentlichen vertikale Ebene, die auch die Einschub- und Abstellrichtung der Fahrräder im Fahrradständer 1 im Grundsätzlichen bestimmt. Diese Ebene ist bei der Ausführungsform der Fig. 1 normal zum Träger 2 verlaufend, ausgebildet, was einer "Geraden" Parkierung entspricht.

Innerhalb dieser Stellebene genannten Ebene ist nun der Steher 4 gegenüber der Vertikalen V vom Träger 2 weg, somit zum einparkenden Benutzer hin, geneigt. Durch diese Schräglage erreicht man es, dass die Arme, wenn sie nach der Benutzung des Fahrradständers vom Benutzer in der angehobenen und zumeist noch schräg zur Einstellebene verlaufender Position losgelassen werden, beim Absinken nach unten, sich in diese Ebene verdrehen, da nur dann ihr Schwerpunkt die tiefste Lage einnimmt und alle anderen Positionen instabil sind. Das bedeutet, dass jeder Stellplatz des Fahrradständers in unbenutzter und somit einfahrbereiter Position das Einfahren eines Fahrrades auch tatsächlich leicht und problemlos ermöglicht, da der Arm den Stellplatz zuverlässig freigibt.

Ein weiterer Vorteil, den man durch die Schrägstellung erreicht, liegt darin, dass der Arm durch geringes Verdrehen aus der normal zur Stellebene liegenden Lage seine Winkellage sowohl gegenüber der Horizontalen als auch gegenüber der Vertikalen ändert und so leichter an Besonderheiten des Fahrradrahmens, wie Schräglage der Rahmenrohre etc. angepaßt werden kann und so die Befestigung am Rahmen erleichtert.

Im dargestellten Ausführungsbeispiel ist der Träger 2 an seinen beiden Enden jeweils einer bügelartigen Tragstruktur 6 verbunden und wird von diesen beiden Verankerungselementen gehalten. Durch die Ausdehnung der Verankerungsbügel 6 in Einstellrichtung ist diese Verankerung sehr massiv und die Verankerungsbügel liefern gleichzeitig eine optisch gut erkennbare seitliche Begrenzung des Fahrradständers, auch, wenn dieser leer ist und ermöglichen gleichzeitig die Anbringung von, gegebenenfalls beleuchteten bzw. beweglichen Reklametafeln oder dreidimensionalen Reklameobjekten oder Hinweisen im Bereich des Bogens.

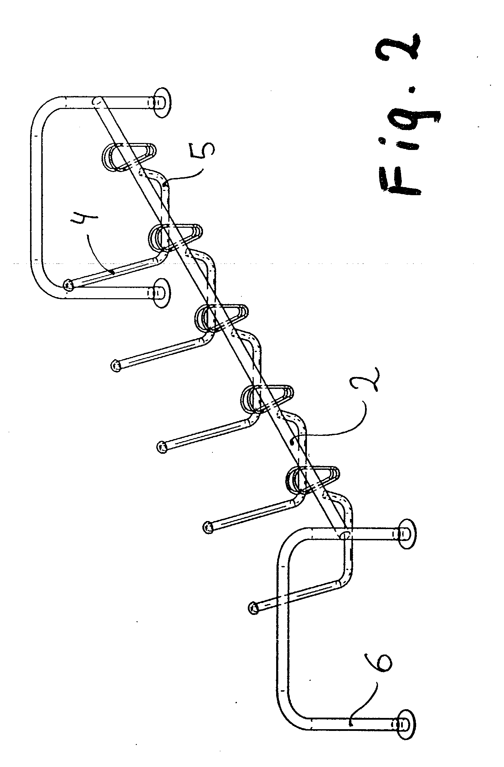

Im dargestellten Ausführungsbeispiel ist der Träger 2 gekröpft ausgebildet, das heißt, an seinen Enden abgewinkelt, und liegt daher "vor" den vertikalen Teilen der Verankerungsbügel. Dies ermöglicht eine eng am Straßenrand (oder einem Gebäude) angeordnete Position mit entsprechend günstiger Reinigungsmöglichkeit durch ein Fahrzeug, ohne dass die Montage direkt am Straßenrand erfolgen muß, was aus Sicherheitsgründen, aber auch wegen der Unversehrtheit des Randsteines (oft aus Granit) günstig ist. Selbstverständlich kann der Träger 2 auch gerade ausgeführt sein, wie in Fig. 2 dargestellt.

Der an Hand der Fig. 1 detailliert erläuterte Fahrradständer kann verschiedentlich abgewandelt werden. So zeigt die Fig. 2 einen analog ausgebildeten Fahrradständer, bei dem aber die Einstellrichtung, entsprechend der Ebene, die durch die Ständer 4 und die Verbindungsbügel 5 definiert wird, nicht normal auf die Längsrichtung des Trägers 2 steht. Passenderweise sind auch die Verankerungsbügel 6 in Einfahrtrichtung und somit nicht normal zu dieser Richtung des (hier gerade ausgebildeten) Trägers 2 angeordnet. Bei einer derartigen Anordnung erreicht man es, dass benachbarte Fahrräder mit ihren Lenkern und Pedalen zueinander versetzt angeordnet sind, was das Einstellen und Rangieren erleichtert. Darüber hinaus gibt es in vielen Benutzungssituationen Zugangsmöglichkeiten nur von einer Seite, ähnlich, wie bei Schrägparkplätzen in Einbahnen, so dass auch der Benutzungskomfort beim Einparken bzw. Ausparken erhöht wird.

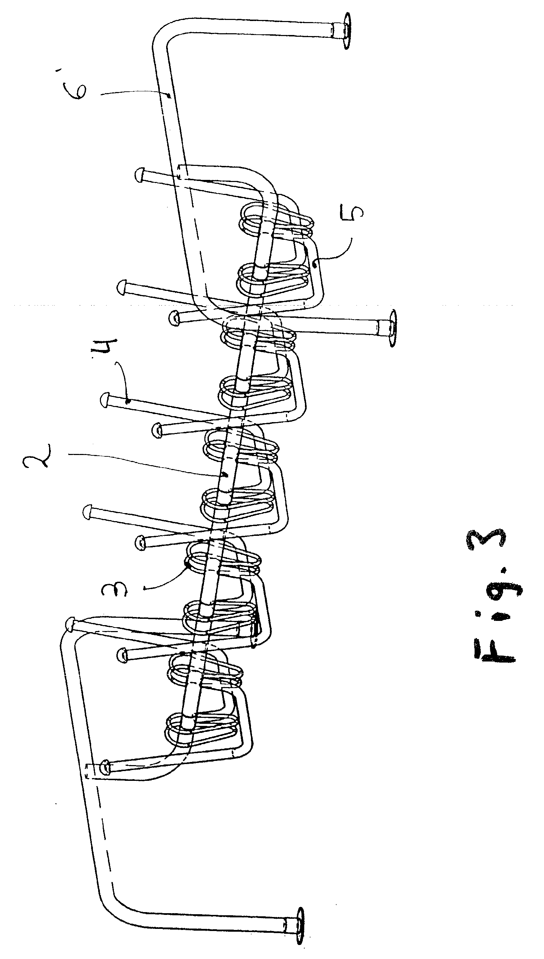

Die Fig. 3 zeigt eine doppelseitige Ausbildung, die aber ansonsten der Fig. 1 entspricht, durch diese doppelseitige Ausbildung wird eine weitere Erhöhung der Anzahl der Stellplätze pro Einheit verbrauchter Grundfläche erreicht, ohne dass ein vermehrter Aufwand für die Fundamentierung bzw. Befestigung und Montage des erfindungsgemäßen Radständers notwendig ist. Die Verankerungsbügel 6' erstrecken sich zu beiden Seiten über wesentliche Bereiche der Einstelltiefe (etwa 1 m gegenüber etwa 1,7 m), so dass die Stabilität gewährleistet und auch die optische Erkennbarkeit auf beiden Seiten gegeben ist.

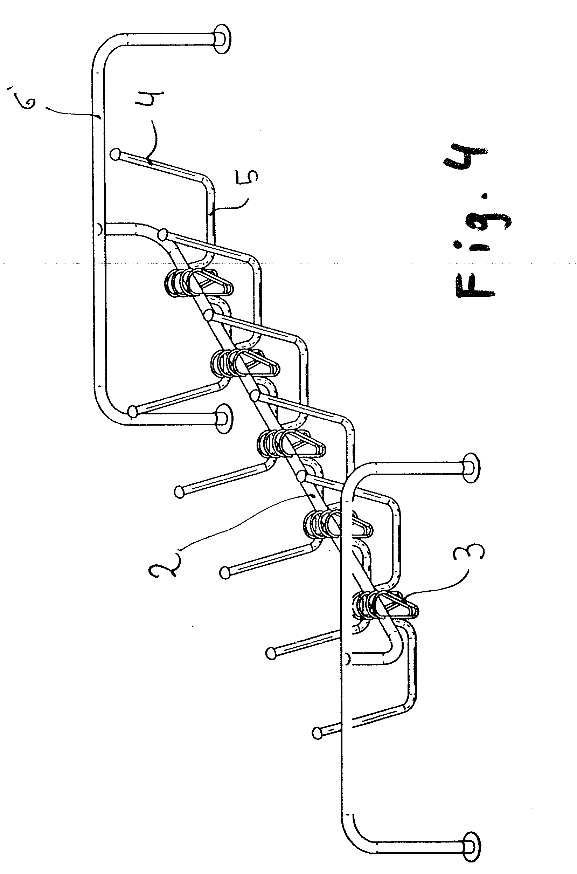

Die Fig. 4 zeigt eine Ausführungsform ähnlich der Fig. 2, nur wiederum mit einer schrägen Parkordnung, so dass hier die Vorteile sowohl der doppelseitigen Benutzung als auch der schrägen Anordnung gegeben sind.

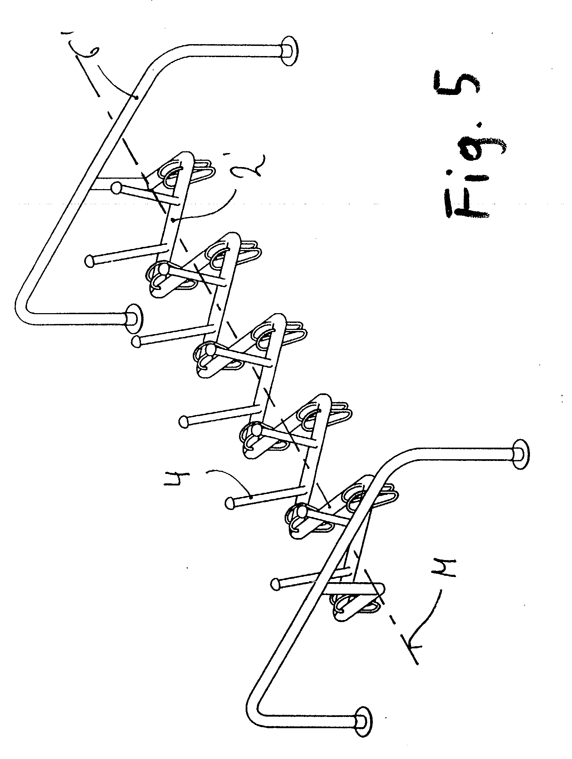

Die Fig. 5 zeigt eine Variante, die eine besonders dichte Anordnung der abgestellten Fahrräder erlaubt, dabei ist der Träger 2 nicht mehr durchgehend gerade ausgebildet, sondern zick-zack-förmig gebogen oder gestückelt ausgeführt, was es ermöglicht, die Vorderräder der auf der einen Seite abgestellten Fahrräder tief in den Bereich der Vorderräder der auf der anderen Seite abgestellten Fahrräder zu schieben und so die Fahrräder an ihrem Bereich mit der geringster Seitenerstreckung (vor dem Lenker und den Pedalen) quasi ineinander zu verschränken. Als Ausgleich für den höheren Aufwand beim Träger 2' ist zu erkennen, dass die Steher 4 bei dieser Ausführungsform direkt am Träger 2' befestigt, bevorzugt angeschweißt, werden können, so dass auf die Verbindungsteile 5 verzichtet werden kann, so dass deren Aufgabe abschnittsweise der Träger 2' übernimmt.

Es ist auch bei dieser Ausführungsform durch die Schrägstellung der Steher 4 und die "Bodenfreiheit" sichergestellt, dass die erfindungsgemäßen Ziele erreicht werden. Zu dieser Ausführungsform soll noch ausgeführt werden, dass die Einstellrichtung, in der ja die Neigung der Steher 4 vorgesehen ist, hier durch die Mittelrichtung M des zick-zackverlaufenden Trägers 2' bzw. die Richtung normal dazu definiert werden kann.

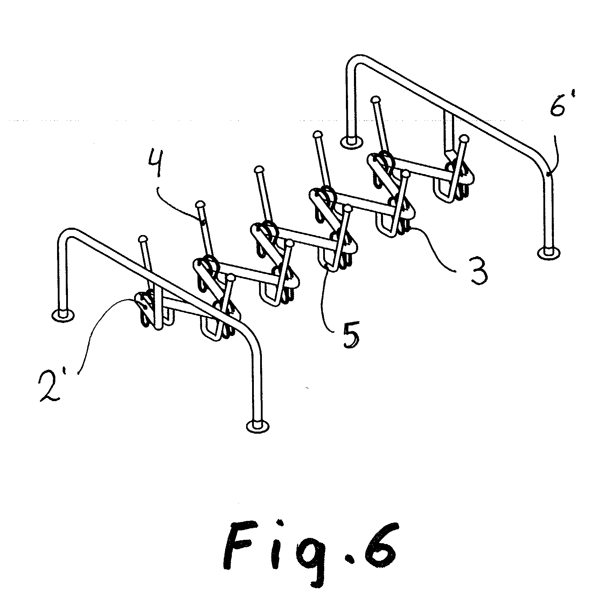

Die Fig. 6 schließlich zeigt eine Variante ähnlich der Fig. 5, wobei aber die Steher 4 wiederum über Verbindungsteile 5 verfügen, die Größenverhältnisse der einzelnen Abschnitte des Trägers 2' zu den einzelnen Stellplätzen also anders ist, als in Fig. 5.

Die Erfindung ist nicht auf die dargestellten und beschriebenen Ausführungsbeispiele beschränkt, sondern kann vielfach abgewandelt werden. So ist es möglich, statt geschlossener Profile für den Träger 2' die Verbindungsbögen 5, die Steher 4 und die Verankerungsbögen 6, 6' Profile mit anderem Querschnitt zu verwenden. Dies kann insbesondere zur Verhinderung der Hohlraumkorrosion vorteilhaft sein. Die Vorderradaufnahmen 3 müssen nicht die dargestellte Bügelform aufweisen, sie können durch flügelartige Platten, Scheiben oder radial bezüglich des Trägers 2 angeordnete Stäbe gebildet werden. So, wie weiter oben für die Verbindungsbögen 5 erläutert, ist es selbstverständlich möglich, auch am Träger 2, 2' nach unten ragende und auf der Fahrbahnebene aufliegende Füße vorzusehen, um die mechanische Festigkeit zu erhöhen.

Selbstverständlich ist es möglich, diese Füße in der Fahrbahn zu verankern, doch wird dies aus den eingangs genannten Gründen der einfachen Montage unter Erhaltung der Integrität der Fahrbahnoberfläche nur in Ausnahmefällen notwendig sein. Selbstverständlich ist es möglich, diese Abstützungen durch einzelne oder alle der Vorderradaufnahmen auszugestalten, da in diesem Bereich ein Begehen des Fahrradständers nicht zu erwarten ist, kann es hier auch nicht zu den Behinderungen und zum Stolpern der Benutzer, wie bei vorbekannten Fahrradständern kommen.

Eine Änderung, die ebenfalls unter die Erfindung fällt, besteht darin, die Verbindungsteile nach oben zu richten und die Steher, die nach wie vor an diesen Verbindungsteilen befestigt sind, nach schräg unten ragen zu lassen. Es wird dadurch die Reinigung des Bodens noch weiter erleichtert, die Verbindungsteile können zum Anlehnen und gegebenenfalls Fixieren der Fahrräder verwendet werden. Die Fixierarme sind, wie oben an Hand der Figuren erläutert, an den Stehern verdrehbar und verschieblich gelagert und so wie bei den anderen Varianten zu bedienen.

Die Schräglage der Steher 4 richtet sich im wesentlichen nach den Gleiteigenschaften und den Reibungsbedingungen der an den Stehern anliegenden Fixierarm, die Schräglage soll so groß sein, dass sie auch unter ungünstigen Umständen während des Absinkens nach der Benutzung, die oben erläuternde Drehbewegung durchführen. Als Obergrenze der Neigung ist die Winkellage anzusehen, bei der durch die Schrägstellung die Befestigung des Armes am Rahmen des Fahrzeuges nicht mehr begünstigt, sondern eher erschwert wird bzw. die Winkellage, bei der der schräg nach vorne, dem kommenden Benutzer zugewandte Arm mit seinem Ende am Boden aufliegt und somit der Verschmutzung und Korrosion ausgesetzt ist. Bewährt haben sich Winkel zwischen 5 und 25°, bevorzugt werden Winkel zwischen 10 und 20° und besonders bevorzugt eine Schrägstellung des Stehers um etwa 15° bezüglich der Vertikalen.

Die oberen (bzw. freien) Enden der Steher sollen so ausgebildet sein, dass sie das Entfernen der Fixierarme zuverlässig verhindern, dass Sie (insbesondere, wenn sie nach oben ragen) auch bei Dunkelheit gut sichtbar sind und dass sie, auch wenn eine Person dagegen fällt oder stößt, keine Verletzungen verursachen.

Die Befestigung der einzelnen Teile miteinander kann, insbesondere bei Verwendung von rohrförmigen Profilen, mittels passender T-Stücke erfolgen, die in die jeweiligen Rohrenden eingeschoben und passend fixiert (Schrauben, Nieten, Schweißen) werden.

## Patentansprüche

1. Fahrradständer für mehrere Fahrräder, mit einer Aufnahme (3) für die Vorderräder und mit Stehern (4) an denen jeweils ein Fixierarm zur Festlegung am Fahrradrahmen drehbar und längsverschieblich montiert ist, **dadurch gekennzeichnet, dass** sowohl die Aufnahmen (3) für die Vorderräder als auch die Steher (4) an einem oberhalb des Fahrbahnniveaus angeordneten Träger (2) befestigt sind und dass die Steher (4) gegenüber der Vertikalen (V) in Einfahrtrichtung der Fahrräder geneigt sind.

2. Fahrradständer nach Anspruch 1, **dadurch gekennzeichnet, dass** der Träger (2) mit seinen beiden Enden an jeweils einem Verankerungsbogen (6, 6') befestigt ist.

3. Fahrradständer nach Anspruch 1 oder 2, **dadurch gekennzeichnet, dass** der Träger (2) gekröpft ausgebildet ist.

4. Fahrradständer nach einem der voranstehenden Ansprüche, **dadurch gekennzeichnet, dass** die Steher (4) mittels, gegebenenfalls einstückig mit ihnen ausgebildeten, Verbindungsteilen (5) am Träger (2) befestigt sind.

5. Fahrradständer nach Anspruch 4, **dadurch gekennzeichnet, dass** die Verbindungsteile (5) im wesentlichen U-förmig ausgebildet sind, mit einem ihrer Schenkel am Rahmen befestigt sind und dass der andere Schenkel in den Steher (4) übergeht.

6. Fahrradständer nach Anspruch 4 oder 5, **dadurch gekennzeichnet, dass** die Verbindungsteile (5) direkt oder mittels eines Stützteiles am Fahrbahnniveau aufliegen.

7. Fahrradständer nach Anspruch 4 oder 5, **dadurch gekennzeichnet, dass** die Verbindungsteile (5) selbst oder ein mit ihnen verbundener Stützteil knapp über dem Fahrbahnniveau liegen.

8. Fahrradständer nach einem der voranstehenden Ansprüche, **dadurch gekennzeichnet, dass** die Steher (4) in einem Winkel zwischen 5 und 25°, bevorzugt in einem Winkel zwischen 10 und 20° und besonders bevorzugt in einem Winkel von etwa 15° bezüglich der Vertikalen (V) angeordnet sind.

9. Fahrradständer nach einem der voranstehenden Ansprüche, **dadurch gekennzeichnet, dass** der Träger (2) zick-zack-förmig ausgebildet ist.

10. Fahrradständer nach Anspruch 9, **dadurch gekennzeichnet, dass** die Steher (4) direkt am Träger (2) angeordnet sind.
